# EUROPÄISCHE PATENTSCHRIFT

(11) **EP 1 648 068 B1**
(45) Veröffentlichungstag und Bekanntmachung des Hinweises auf die Patenterteilung: **28.09.2011**
(21) Anmeldenummer: 05022133.2
(22) Anmeldetag: 11.10.2005
(51) Int. Cl.: H02G 3/32

(54) **Halter zum Halten von elektrischen Leitungen**
Holder for supporting electrical cables
Dispositif pour le support de câbles électriques

(30) Priorität: 13.10.2004 DE 102004049894; 13.10.2004 US 618146 P
(43) Veröffentlichungstag der Anmeldung: 19.04.2006
(73) Patentinhaber: Airbus Operations GmbH, 21129 Hamburg (DE)
(72) Erfinder: Wunderlich, Dennis, 21614 Buxtehude (DE); Schoof, Christian, 21640 Horneburg (DE); Pampel, Christian, 22941 Bargteheide (DE)
(74) Vertreter: Dilg, Andreas

(56) Entgegenhaltungen:
- EP-A- 0 054 478
- EP-A- 0 498 058
- US-A- 5 169 100

## Beschreibung

Die Erfindung betrifft Halter, insbesondere Halter für elektrische Leitungen im Flugzeugbau.

Halter werden seit vielen Jahren im Flugzeugbau eingebaut und genutzt. Dabei werden alle Halter auf die Struktur (kohlefaserverstärkter Kunststoff (CFK) oder Aluminium) genietet. Diese Halter haben hauptsächlich die Aufgabe elektrische Leitungen zu halten.

Bekannte Halter im Flugzeugbau sind vornehmlich aus Aluminium gebildet. Halter aus Aluminium müssen laut neuester Technical Design Directives TDD 92A001L Issue C für das Programm A380 zusätzlich einen Masseanschluss bekommen, deren Komponenten unnötiges Gewicht verursachen.

Aus US 5,169,100 ist ein Halter bekannt, der eine von einer Basis abstehende Buchse aufweist, die eine Haltelement für Leitungen aufnehmen kann mit einer aus Kunststoff gebildeten Basis und einem von der Basis weg erstreckenden Bauteil.

Aufgabe der Erfindung ist die Schaffung eines Halters, der wenig Gewicht hat und trotzdem die oben genannten Vorgaben erfüllt.

Die Lösung der gestellten Aufgabe ist dem Patentanspruch 1 zu entnehmen. Vorteilhafte Weiterentwicklungen der Erfindung sind in den Unteransprüchen angegeben.

Der erfindungsgemäße Halter weist eine Basis und ein sich von der Basis erstreckendes Bauteil auf. Die Basis ist aus Kunststoff und wird mit der Flugzeugstruktur verbunden. Gemäß einer Weiterbildung der Erfindung ist der Kunststoff vorzugsweise glasfaserverstärkt.

Gemäß einer noch weiteren Weiterentwicklung der Erfindung ist die Basis oder der gesamte Halter speziell aus Polyamid (PA) 66 WL 5.2206.3 mit einer Rohdichte von 1,40 g/cm³. Aufgrund der niedrigen Dichte, welche sich positiv auf das Gewicht auswirkt und der höheren Steifigkeit gegenüber Aluminium- und PEEK-Haltern, hat dieses Material verschiedene Vorteile.

Polyamid (PA) 66 bezeichnet Polyamide, die aus den Ausgangsstoffen Hexamethylendiamin und Adipinsäure hergestellt sind. Überlicherweise haben Polyamide eine Dichte von 1,01-1,14 g/cm³. Durch Glasfaserverstärkung werden Festigkeit, E-Modul und Maßstabilität erhört. Gemäß der Erfindung wird das oben genannte Polyamid mit etwa 35 Gew% Glasfasern verstärkt, wodurch sich die Rohdichte von 1,40 g/cm³ ergibt.

Das genannte Polyamid hat eine geringe Eigenspannung, hohe Wärmestandfestigkeit von -50°C bis +130°C und verursacht keine Gefügeveränderung bei Impact aufgrund von einer hohen Festigkeit, Schlagzähigkeit und Härte. Die hohe Formgebung sowie die hervorragende Resistenz gegen Fette, Benzin, Mineral- und Schmieröle, Skydrol 500B ist zusätzlich ein Vorteil im Flugzeugbau. Ferner hat ein Halter gemäß der Erfindung, der aus dem oben genannten Polyamid gebildet ist, eine gute elektrische Isolierfähigkeit.

Der Halter aus Polyamid gemäß der Erfindung benötigt keinen Masseanschluss und keinen Oberflächenschutz. Ferner kann bei höheren Stückzahlen auf Spritzgussteile umgeschwenkt werden, was sich positiv auf die Herstellungskosten des Halters auswirkt. Dabei lassen sich alle Vorteile eines Halters aus Polyamid, wie z. B. die filigrane Formgebung und die Möglichkeit ggf. mit Metallteilen kombiniert zu werden, ausnutzen.

Im Folgenden wird unter Bezugnahme auf die beigefügten Zeichnungen ein bevorzugtes Ausführungsbeispiel der Erfindung beschrieben. Es zeigen:
Fig. 1 eine perspektivische Ansicht eines Halters gemäß dem Stand der Technik;
Fig. 2 eine perspektivische Ansicht eines Halters gemäß einem bevorzugten Ausführungsbeispiel der Erfindung; und
Fig. 3A - H verschiedene Ansichten des Halters gemäß dem bevorzugten Ausführungsbeispiel.

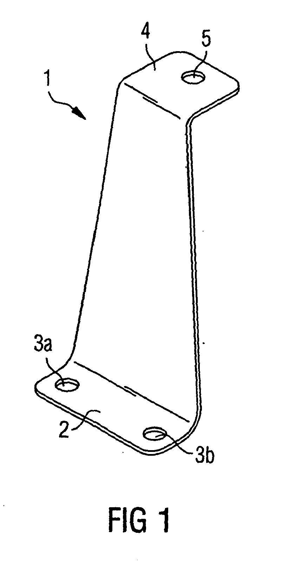

Fig. 1 zeigt einen allgemein bekannten Halter 1, der im Flugzeugbau verwendet wird, um elektrische Leitungen zu halten. Der Halter 1 ist aus Aluminium gebildet und weist einen ersten abgewinkelten Bereich 2 auf. Über Verbindungsstellen 3a, 3b wird der Halter 1 aus Aluminium üblicherweise an die Struktur eines Flugzeugrumpfes genietet.

Der in Fig. 1 gezeigte bekannte Halter 1 weist ferner einen zweiten abgewinkelten Bereich 4 auf, der eine Bohrung 5 enthält, über die üblicherweise elektrische Leitungen (nicht gezeigt) mittels einer Kabelschelle an dem Halter 1 befestigt werden.

Der in Fig. 1 gezeigte Halter 1 aus Aluminium muss gemäß neuester Technical Design Directives TDD 92A00 1 L Issue C für das Programm A380 zusätzlich mit einem Masseanschluss versehen werden.

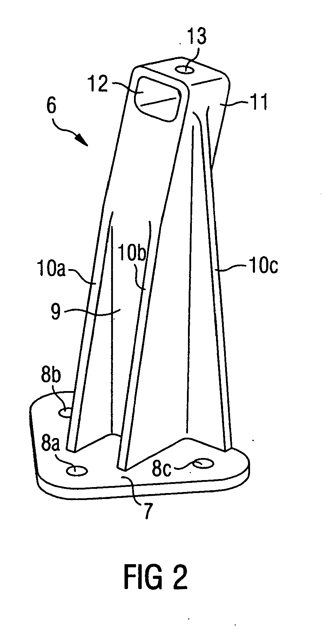

Fig. 2 zeigt eine perspektivische Ansicht eines Halters 6 gemäß einem bevorzugten Ausführungsbeispiel der Erfindung.

Gemäß dem bevorzugten Ausführungsbeispiel enthält der Halter 6 eine Basis 7, in der Löcher 8a, 8b, 8c gebildet sind. Die Basis 7 ist beispielsweise dreieckförmig ausgebildet, wobei an den Eckbereichen die Löcher 8a - c gebildet sind. Andere Bauformen der Basis 7 sind je nach Einsatzgebiet und vorhandenem Platz möglich.

Die Basis 7 ist gemäß dem bevorzugten Ausführungsbeispiel aus Kunststoff, beispielsweise Polyamid (PA) 66 WL 5.2206.3 mit 35 Gewichtsprozent Glasfasern und einer Rohdichte von 1,40 g/cm³.

Die Basis 7 wird über die Löcher 8a - c an der Struktur eines Flugzeugrumpfes befestigt. Je nach Material der Struktur (beispielsweise kohlefaserverstärkter Kunststoff (CFK) oder Aluminium) können verschiedene Verbindungstechniken verwendet werden. Beispiele für unlösbare Verbindungen von Teilen aus Polyamid sind Heizelementschweißen, Rotationsschweißen, Vibrationsschweißen, Ultraschallschweißen, Nieten mittels Ultraschall, Nieten und Kleben. Beispiele für lösbare Verbindungen sind Schnappen, Pressen und Schrauben.

Obwohl in Fig. 2 drei Löcher 8a - c zur Befestigung der Basis 7 an einer Struktur eines Flugzeugrumpfes gezeigt sind, können beliebig viele Befestigungsstellen auf der Basis 7 vorgesehen werden.

Wie in Fig. 2 gezeigt, erstreckt sich ein Bauteil 9 im Wesentlichen senkrecht von der Basis 7 weg , wobei eine Winkeländerung möglich ist. Gemäß dem bevorzugten Ausführungsbeispiel ist das Bauteil 9 aus dem gleichen Polyamid gebildet, wie die Basis 7. Alternativ kann das Bauteil 9 auch aus Aluminium oder einem anderen leichten Metall gebildet werden und mittels bekannter Verbindungstechniken an der Basis 7 aus Polyamid befestigt werden.

Gemäß dem bevorzugten Ausführungsbeispiel, wie in Fig. 2 gezeigt, sind das Bauteil 9 und die Basis 7 einstückig, beispielsweise mittels Spritzgusstechnik, ausgebildet.

Eine getrennte Herstellung der Basis 7 und des Bauteils 9 und ein nachträgliches Verbinden der Basis 7 mit dem Bauteil 9 mittels der oben genannten Verbindungstechniken ist möglich.

Gemäß dem bevorzugten Ausführungsbeispiel weist das Bauteil 9 Versteifungsrippen 10a - c auf. Diese Versteifungsrippen 10 erstrecken sich im Wesentlichen senkrecht von der Basis 7 in Längsrichtung des Bauteils 9 und dienen zur Verbesserung der statischen Steifigkeit des Halters 6. Die Versteifungsrippe 10 c ist im Wesentlichen senkrecht zu den Versteifungsrippen 10a und 10b angeordnet.

Gemäß dem bevorzugten Ausführungsbeispiel sind die Versteifungsrippen 10a - 10c im Bereich der Basis 7 breiter ausgebildet, als an einem freiliegenden Ende der Versteifungsrippen 10a - c. Die Versteifungsrippen 10a - c haben folglich im Wesentlichen die Form eines Dreiecks.

Das Bauteil 9 weist an einem freiliegenden von der Basis 7 entfernten Ende einen Endbereich 11 auf. Dieser Endbereich 11 des Bauteils 9 ist gegenüber der Längsrichtung des sich von der Basis 7 wegerstreckenden Bauteils 9 leicht angewinkelt.

Der Endbereich 11 enthält eine Ausnehmung 12 (im Folgenden auch als Durchgangsbohrung bezeichnet) für eine Clip Mutter.

Eine Stirnseite des Endbereichs 11 weist eine Bohrung 13 auf, die eine Verbindung zu der Durchgangsbohrung 12 herstellt. Über diese Bohrung 13 können beispielsweise elektrische Kabel, die von dem Halter 6 gehalten werden, mittels einer Kabelschelle an dem Halter 6 befestigt werden.

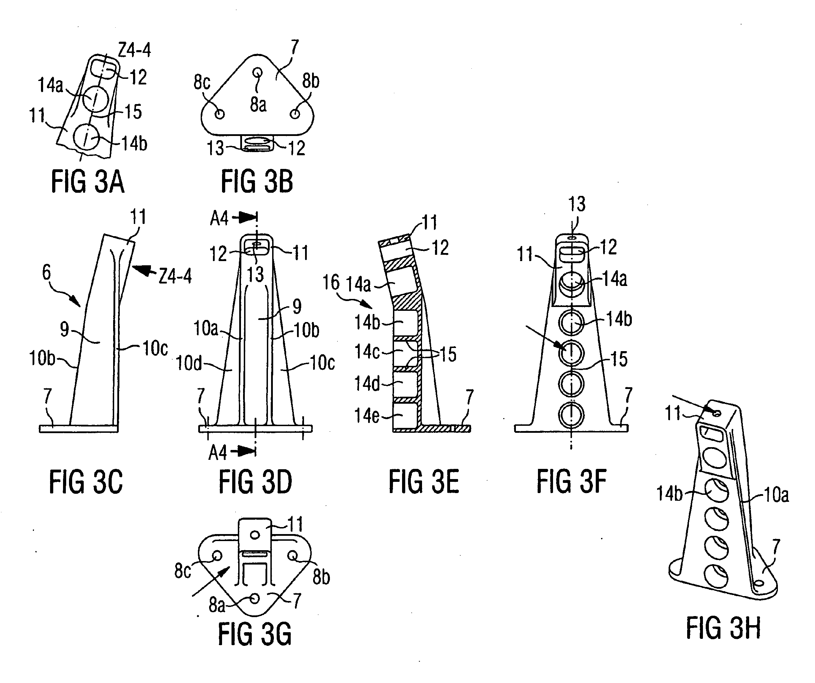

Die Fig. 3A - H zeigen verschiedene Ansichten des in Fig. 2 gezeigten bevorzugten Ausführungsbeispiels, wobei gleiche Elemente mit gleichen Bezugsziffern versehen sind.

Fig. 3A zeigt den Endbereich 11 des Bauteils 9. Der Endbereich 11 ist gemäß dem bevorzugten Ausführungsbeispiel derart ausgebildet, dass er sich zu der Durchgangsbohrung 12 hin verjüngt. Wie in Fig. 3A gezeigt, sind in dem Endbereich 12 des Bauteils 9 Ausnehmungen 14a, 14b gebildet, die zur Gewichtseinsparung dienen. Die Ausnehmungen 14a und 14b bilden Stege 15, die zur Verbesserung der statischen Steifigkeit des Endbereichs 11 beitragen.

Fig. 3B zeigt eine Draufsicht auf die Basis 7 von oben. Wie in Fig. 3B gezeigt, liegt der Endbereich 11 des Bauteils 9 in einer Draufsicht von oben neben der Basis 7.

Fig. 3C zeigt eine Seitenansicht des Halters 6, wobei deutlich zu erkennen ist, dass der Endbereich 11 des Bauteils 9 von der Längsrichtung des Bauteils 9 abgewinkelt ausgebildet ist. Die Versteifungsrippe 10c erstreckt sich im Wesentlichen senkrecht von der Basis 7 in Richtung Endbereich 11. Der Endbereich 11 des Bauteils 9 ist an dem von der Basis 7 abgewandten Ende der Versteifungsrippen 10 nach außen von der Basis 7 weg abgewinkelt.

Fig. 3D zeigt den Halter 6 von hinten.

Fig. 3E zeigt eine Querschnittsseitenansicht entlang der Schnittlinie A4 - A4 in Fig. 3D.

Wie deutlich zu erkennen, sind auf einer Seite 16, die eine Auflagefläche zum Halten von beispielsweise elektrischen Leitungen bildet, in regelmäßigen Abständen Ausnehmungen 14b, 14c, 14d, 14e gebildet. Diese Ausnehmungen durchbohren das Bauteil 9 nur teilweise und dienen durch Bildung von Stegen 15 zwischen den Ausnehmungen 14 zur Verbesserung der statischen Steifigkeit und zur Gewichtsersparnis des Halters 6.

Wie in Fig. 3E gezeigt, verläuft die Durchgangsbohrung 12 für eine Clip Mutter durch den Endbereich 11 des Bauteils 9 hindurch.

Fig. 3F zeigt eine Ansicht des Halters 6 gemäß dem bevorzugten Ausführungsbeispiel von vorne.

Fig. 3G zeigt die Basis 7 von unten und Fig. 3H zeigt den Halter 6 gemäß dem bevorzugten Ausführungsbeispiel von schräg vorne.
Obwohl die Erfindung im Vorangegangenen unter Bezugnahme auf ein bevorzugtes Ausführungsbeispiel für einen Halter zum Halten von elektrischen Leitungen im Flugzeugbau beschrieben wurde, ist es selbstverständlich, dass verschiedene Modifikationen und Änderungen in der Bauweise des Halters vorgenommen werden können, ohne den Schutzbereich der Erfindung zu verlassen, sofern der Halter aus Polyamid mit den oben beschriebenen Eigenschaften oder aus vergleichbaren glasfaserverstärkten Kunststoffen gebildet ist.

Der erfindungsgemäße Halter kann ferner in anderen Bereichen mit ähnlichen Anforderungen eingesetzt werden.

Bezugszeichenliste
- 1: Halter (Stand der Technik)
- 2: Abgewinkelter erster Bereich
- 3a, 3b: Befestigungsstellen
- 4: Abgewinkelter zweiter Bereich
- 5: Bohrung
- 6: Halter gemäß der Erfindung
- 7: Basis
- 8a-c: Löcher
- 9: Bauteil
- 10a- c: Versteifungsrippen
- 11: Endbereich
- 12: Durchgangsbohrung
- 13.: Bohrung
- 14: Ausnehmungen
- 15: Stege
- 16: Haltefläche

## Patentansprüche

1. Leitungshalter zum Halten elektrischer Leitungen mit
einer aus Kunststoff gebildeten Basis (7); und
einem sich von der Basis (7) weg erstreckenden Bauteil (9),
**dadurch gekennzeichnet, dass**
das sich weg erstreckende Bauteil eine Auflagefläche (16) bildet, in der in regelmäßigen Abständen Ausnehmungen (14b, 14c, 14d, 14e) ausgebildet sind, die das Bauteil nur teilweise durchsetzen.

2. Leitungshalter nach Anspruch 1, wobei das Bauteil (9) mit der Basis (7) unlösbar oder lösbar verbunden ist.

3. Leitungshalter nach Anspruch 1 oder 2, wobei das Bauteil (9) Versteifungsrippen (10) oder auch keine aufweist.

4. Leitungshalter nach Anspruch 3, wobei sich die Versteifungsrippen (10) im Wesentlichen in Längsrichtung des Bauteils (9) erstrecken.

5. Leitungshalter nach einem der vorangegangenen Ansprüche, wobei die Ausnehmungen (14b, 14c, 14d, 14e), sich im Wesentlichen parallel zur Basis (7) erstrecken.

6. Leitungshalter nach einem der vorangegangenen Ansprüche, wobei das Bauteil (9) einen freien Endbereich (11) aufweist, der unter einem Winkel zur Längsrichtung des Bauteils (9) geneigt ist.

7. Leitungshalter nach einem der vorangegangenen Ansprüche, wobei an der Stirnseite des Bauteils (9) mindestens eine Bohrung (13) gebildet ist.

8. Leitungshalter nach einem der vorangegangenen Ansprüche, wobei das Bauteil (9) aus Kunststoff ist.

9. Leitungshalter nach einem der vorangegangenen Ansprüche, wobei der Kunststoff ein Polyamid ist.

10. Leitungshalter nach Anspruch 9, wobei das Polyamid eine Rohdichte von 1,40 g/cm³ oder geringer aufweist.

11. Leitungshalter nach Anspruch 9 oder 10, wobei das Polyamid 35 Gewichtsprozent Glasfasern enthält.

12. Verwendung des Leitungshalters (6) gemäß einem der Ansprüche 1 bis 11 im Flugzeugbau zum Halten von elektrischen Leitungen.

## Claims

1. Line holder for holding electrical lines with
a base (7) formed of plastic; and
a component (9) which extends away from the base (7),
**characterized in that**,
the component which extends away forms a supporting surface (16), in which supporting surface recesses (14b, 14c, 14d, 14e) are formed at regular distances, which recesses pass through the component only partially.

2. Line holder according to claim 1, wherein the component (9) is bonded permanently or removably to the base (7).

3. Line holder according to claim 1 or 2, wherein the component (9) comprises reinforcing ribs (10) or is free of reinforcing ribs.

4. Line holder according to claim 3, wherein the reinforcing ribs (10) extend essentially in a longitudinal direction of the component (9).

5. Line holder according to one of the preceding claims, wherein the recesses (14b, 14c, 14d, 14e) extend essentially parallel to the base (7).

6. Line holder according to one of the preceding claims, wherein the component (9) comprises a free end portion (11) which is inclined at an angle to the longitudinal direction of the component (9).

7. Line holder according to one of the preceding claims, wherein at least one bore (13) is formed on the front face of the component (9).

8. Line holder according to one of the preceding claims, wherein the component (9) is made of plastic.

9. Line holder according to one of the preceding claims, wherein the plastic is a polyamide.

10. Line holder according to claim 9, wherein the polyamide has a bulk density of 1,40 g/cm³ or less.

11. Line holder according to one of claims 9 or 10, wherein the polyamide comprises 35 weight-percent glass fibers.

12. Use of a line holder (6) according to one of claims 1 to 11 in aircraft construction for holding electrical lines.

## Revendications

1. Support destiné au maintien de câbles électriques comprenant
une base (7) formée de matière plastique ; et
un composant (9) s'étendant à l'écart de la base (7),
**caractérisé en ce que**
le composant s'étendant à l'écart forme une surface d'appui (16), dans laquelle sont réalisés à distances régulières des creux (14b, 14c, 14d, 14e) qui ne traversent qu'en partie le composant.

2. Support de câbles électriques suivant la revendication 1, dans lequel le composant (9) est assemblé de façon inamovible ou amovible avec la base (7).

3. Support de câbles électriques suivant l'une des revendications 1 et 2, dans lequel le composant (9) présente des raidisseurs (10) ou ne présente aucun raidisseur.

4. Support de câbles électriques suivant la revendication 3, dans lequel les raidisseurs (10) s'étendent essentiellement dans la direction longitudinale du composant (9).

5. Support de câbles électriques suivant l'une des revendications précédentes, dans lequel les creux (14b, 14c, 14d, 14e) s'étendent de façon essentiellement parallèle à la base (7).

6. Support de câbles électriques suivant l'une des revendications précédentes, dans lequel le composant (9) présente une zone d'extrémité libre (11), inclinée sous un angle par rapport à la direction longitudinale du composant (9).

7. Support de câbles électriques suivant l'une des revendications précédentes, dans lequel au moins un alésage (13) est formé sur le côté frontal du composant (9).

8. Support de câbles électriques suivant l'une des revendications précédentes, dans lequel le composant (9) est en matière plastique.

9. Support de câbles électriques suivant l'une des revendications précédentes, dans lequel la matière plastique est un polyamide.

10. Support de câbles électriques suivant la revendication 9, dans lequel le polyamide présente une masse volumique apparente de 1,40 g/cm3 ou moins.

11. Support de câbles électriques suivant l'une des revendications 9 et 10, dans lequel le polyamide renferme 35% en poids de fibres de verre.

12. Utilisation du support de câbles électriques (6) suivant l'une des revendications 1 à 11 dans la construction aéronautique pour le maintien de câbles électriques.
